# FASCICULE DE BREVET EUROPEEN

(11) **EP 2 058 526 B1**
(45) Date de publication et mention de la délivrance du brevet: **02.08.2017**
(21) Numéro de dépôt: 08168680.0
(22) Date de dépôt: 07.11.2008
(51) Int. Cl.: F04D 29/32, F04D 29/34, F01D 5/26

(54) **Ensemble d'une aube de soufflante et de son amortisseur, amortisseur d'aube de soufflante et méthode de calibrage de l'amortisseur**
Laufradeinheit eines Gebläses mit Dämpfer, Laufraddämpfer des Gebläses und Kalibriermethode des Dämpfers
Unit of a fan vane and its buffer spring, buffer spring of a fan vane and method of calibrating the buffer spring

(30) Priorité: 12.11.2007 FR 0707923
(43) Date de publication de la demande: 13.05.2009
(73) Titulaire: Safran Aircraft Engines, 75015 Paris (FR)
(72) Inventeur: Mace, Jérôme Paul Marceau, 77240 Cesson (FR); Nitre, Thierry, 91250 Tigery (FR); Reghezza, Patrick Jean-Louis, 77000 Vaux Le Penil (FR)
(74) Mandataire: Gevers & Orès

(56) Documents cités:
- EP-A- 1 452 692
- EP-A- 1 477 634
- US-A- 3 181 835
- US-A- 3 887 298
- US-A1- 2006 257 262

## Description

La présente invention concerne le domaine des turboréacteurs et notamment les turboréacteurs avec une soufflante avant.

Un turboréacteur à double corps comporte fonctionnellement, d'amont en aval dans le sens d'écoulement des gaz, une soufflante dans un carter, un compresseur, une chambre de combustion, une turbine et une tuyère d'éjection. Les deux corps, basse pression et haute pression, tournent indépendamment l'un de l'autre et sont coaxiaux. Le turboréacteur comporte un compresseur à basse pression BP, en amont d'un compresseur à haute pression HP, et une turbine HP, en amont d'une turbine BP. Par interne ou externe, ou intérieur ou extérieur, on entendra, dans la description, interne ou externe, ou intérieur ou extérieur, au moteur, radialement, par rapport à son axe.

La soufflante comprend un disque de soufflante, pourvu d'aubes, relié solidairement à l'arbre basse pression par un tourillon de rotor basse pression. Chaque aube de soufflante s'étend radialement dans le moteur et comprend, de l'extérieur vers l'intérieur, une pale, une plateforme et un pied agencé pour s'engager dans une rainure du disque de soufflante.

Lors de la rotation des aubes dans le carter de soufflante, les aubes ont tendance à vibrer ce qui accélère leur usure et diminue leur durée de vie. Afin de limiter cette usure, il est connu de disposer des amortisseurs sous la plateforme des aubes pour absorber les vibrations.

Un amortisseur est une pièce rigide qui est disposée sous la plateforme, à cheval entre deux aubes adjacentes, de manière à ce que pendant la rotation du moteur, l'amortisseur vienne en appui contre la plateforme.

Tout mouvement relatif entre deux aubes adjacentes entraîne un frottement entre les surfaces en contact des aubes et de l'amortisseur. Ce frottement participe à la dissipation de l'énergie de vibration.

On connaît, par la demande de brevet EP 1 291 492, un amortisseur retenu dans un logement formé sous la plateforme de l'aube. Des éléments de contact sont ménagés en surface de l'amortisseur pour assurer un positionnement correct de l'amortisseur. Un montage approximatif de l'amortisseur empêche un appui plan sur plan entre les surfaces en contact.

La qualité du montage de l'amortisseur dans son logement dépend des tolérances de fabrication dudit amortisseur. Une surépaisseur de l'amortisseur entraîne un positionnement imparfait et une usure prématurée de l'aube avec son amortisseur.

Il se peut également que l'amortisseur soit bien positionné lors de l'étape de montage mais qu'il se déplace lors du fonctionnement du moteur.

Par leur forme, les amortisseurs, sous l'effet de la rotation des aubes, sont entraînés vers l'amont pour entrer en butée contre le flanc amont du logement ménagé dans la plateforme de l'aube, un contact pivot se créant entre l'amortisseur et la plateforme sur le flanc amont du logement. La rotation de l'amortisseur autour de ce pivot, empêche un appui plan sur plan, entraînant l'usure des amortisseurs et de l'aube.

L'art antérieur comprend en outre le document US-A1-2006/257262.

Un premier objectif de l'invention est de limiter l'usure des pièces afin d'augmenter leur durée de vie.

D'autre part, selon le type de turboréacteur, les amortisseurs d'aubes de soufflante, doivent avoir une masse différente. On usine de manière empirique des amortisseurs de masse standard afin d'obtenir des amortisseurs à la masse désirée. Cette opération d'usinage, ou de calibrage, n'est pas réalisée de manière uniforme et ne peut pas être reproduite de manière simple et peu coûteuse.

Un deuxième objectif de l'invention est de calibrer la masse de l'amortisseur de manière simple et reproductible et, ce, sans modifier le positionnement de l'amortisseur par rapport à la plateforme de l'aube.

Afin d'atteindre ces objectifs et de résoudre les inconvénients cités, la demanderesse propose un ensemble d'une aube de soufflante d'un turboréacteur avec soufflante et d'un amortisseur d'aube de soufflante, l'aube de soufflante comprenant un pied et une plate-forme, l'amortisseur de l'aube de soufflante étant adapté pour se fixer dans un logement formé dans la face inférieure de la plateforme, ledit logement comprenant un flanc amont perpendiculaire au pied de l'aube, ensemble caractérisé par le fait que l'amortisseur comprend un bord avant dont une première partie est parallèle au flanc amont du logement et dont une deuxième partie est inclinée par rapport audit flan amont.

De préférence, la partie parallèle au flanc amont est en butée contre le flanc amont du logement.

De préférence encore, l'angle formé entre la partie parallèle du bord avant et la partie inclinée est compris entre 10° et 20°.

Selon une caractéristique de l'invention, la partie inclinée forme une surface plane.

Selon une autre caractéristique de l'invention, la partie inclinée forme une surface incurvée.

De préférence toujours, les arêtes de la partie inclinée sont arrondies.

De préférence toujours, l'amortisseur comprend sur sa face extérieure au moins une zone de contact métallique.

L'invention concerne également un amortisseur d'aube de soufflante d'un turboréacteur, s'étendant dans sa longueur selon un axe orienté X, dans sa largeur selon un axe orienté Y et dans sa hauteur selon un axe Z, comprenant dans sa longueur une première portion avant et une deuxième portion arrière de section transversale polygonale par rapport à l'axe X; l'amortisseur comportant une face supérieure comprenant une face inclinée supérieure droite et une face inclinée supérieure gauche, amortisseur caractérisé par le fait qu'un bord avant est formé à l'avant de la première portion avant de l'amortisseur, le bord avant comprenant une première face transversale par rapport à l'axe X et une deuxième face inclinée par rapport à la dite première face.

L'invention concerne également une méthode de calibrage d'un amortisseur d'un ensemble d'une aube de soufflante d'un turboréacteur avec soufflante et d'un amortisseur d'aube de soufflante comprenant un volume de réserve de masse, méthode dans laquelle:
- on détermine la masse de référence Mref de l'amortisseur ;
- on mesure la masse effective Meff de l'amortisseur;
- on découpe le volume de réserve de masse de manière à ce que la masse de l'amortisseur découpé soit égale à la masse de référence Mref.

Le cas échéant, le volume de réserve de masse se situe à l'extrémité avant de l'amortisseur.

L'invention sera mieux comprise à l'aide du dessin annexé sur lequel:
- la figure 1 représente une vue en perspective, dans la direction transversale par rapport à l'axe du moteur, d'un ensemble d'une aube de soufflante avec un amortisseur selon l'invention;
- la figure 2 représente une vue de l'amont, dans la direction axiale, de l'amortisseur de la figure 1 positionné sous deux aubes de soufflante adjacentes représentées en silhouette;
- la figure 3 représente une vue en perspective de l'amortisseur de la figure 2 dans un repère orienté (X,Y,Z);
- la figure 4 représente la face supérieure de l'amortisseur de la figure 3 lors de l'étape de découpe;
- la figure 5 représente une vue rapprochée de la zone découpée de l'amortisseur de la figure 4.

Un turboréacteur comporte fonctionnellement, d'amont en aval dans le sens d'écoulement des gaz, une soufflante dans un carter, un compresseur, une chambre de combustion, une turbine et une tuyère d'éjection en amont, la soufflante comprenant un disque de soufflante sur lequel sont fixées des aubes. Les aubes sont placées circonférentiellement à la périphérie du disque, adjacentes les unes aux autres.

Par interne ou externe, ou intérieur ou extérieur, on entendra, dans la description, interne ou externe, ou intérieur ou extérieur, au moteur, radialement, par rapport à son axe. Par gauche ou droite, on entendra dans la description, gauche ou droite, au moteur, les directions étant considérées par rapport à l'axe du moteur, orienté de l'amont vers l'aval.

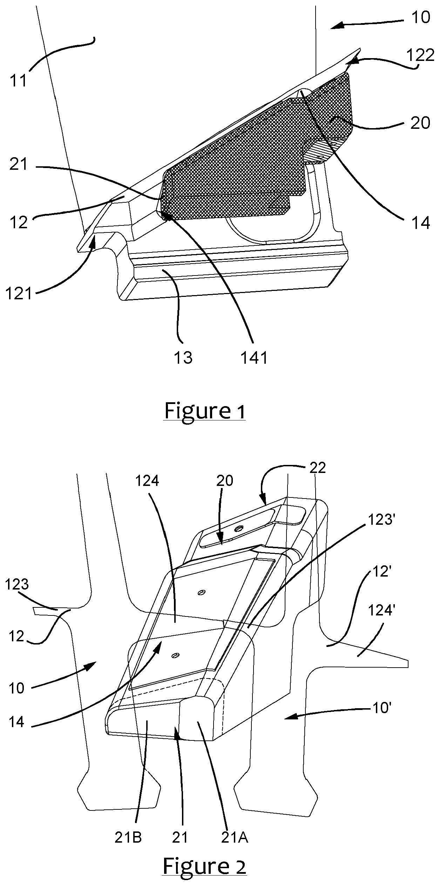

En référence à la figure 1, un amortisseur 20 est logé sous la plateforme 12 d'une aube de soufflante 10.

L'aube 10 s'étend radialement dans le moteur et comprend, de l'extérieur vers l'intérieur, une pale 11, une plateforme 12 et un pied 13 agencé pour se fixer dans le disque de soufflante. En référence à la figure 2, la plateforme 12 s'étend transversalement des deux côtés de la pale 11 et est constituée d'une plateforme latérale droite 124 et d'une plateforme latérale gauche 123. En référence à la figure 2, la plateforme latérale droite 124 est plus large que la plateforme latérale gauche 123.

Toujours en référence à la figure 2, qui montre le positionnement relatif d'un amortisseur 20 entre deux aubes adjacentes 10, 10', l'amortisseur 20 est disposé sous les plateformes 12, 12' de deux aubes 10, 10' fixées circonférentiellement sur le disque de soufflante, la plateforme droite 124 de la plateforme 12 de la première aube 10 étant en contact avec la plateforme gauche 123' de la plateforme adjacente 12' de la deuxième aube 10'.

L'amortisseur 20 est logé dans un logement 14 formé sous les plateformes 12, 12'. Le logement 14 comprend deux parties formées respectivement sous la première plateforme droite 124 et sous la deuxième plateforme gauche 123'. Le logement 14 est agencé pour que l'amortisseur 20 soit en contact plan sur plan avec les surfaces inférieures des plateformes 12, 12' lorsque celui-ci est convenablement logé dans ledit logement 14.

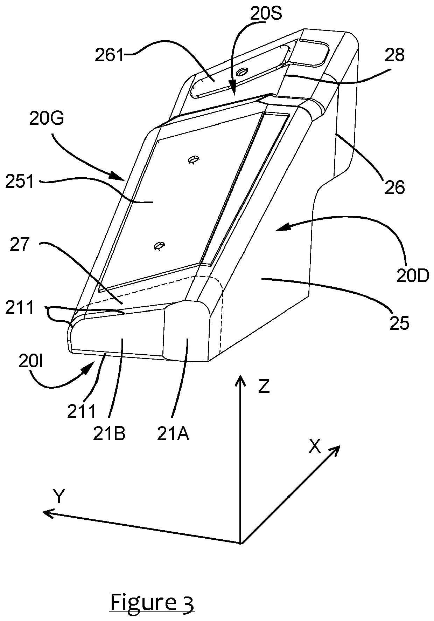

En référence à la figure 3, l'amortisseur 20 s'étend dans sa longueur selon un axe orienté X, dans sa largeur selon un axe orienté Y et dans sa hauteur selon un axe orienté Z. L'amortisseur comprend dans sa longueur une première portion avant 25 et une deuxième portion arrière 26 décalée en hauteur par rapport à la première portion avant 25.

On définit l'avant et l'arrière par rapport à l'axe orienté X, l'axe X étant orienté de l'avant vers l'arrière. On définit le bas (partie inférieure) et le haut (partie supérieure) de l'amortisseur par rapport à l'axe orienté Z, l'axe Z étant orienté du bas vers le haut. On définit les sens gauche et droite par rapport à l'axe orienté Y, l'axe Y étant orienté de droite vers la gauche.

Ainsi, lors du positionnement de l'amortisseur 20 dans son logement 14, l'axe X est sensiblement parallèle à l'axe du moteur, les directions avant et arrière correspondant respectivement aux directions amont et aval.

Les portions avant et arrière 25, 26 ont chacune une section transversale polygonale par rapport à l'axe X, la section transversale de la première portion 25 étant croissante dans le sens de l'axe X.

Les faces latérales 20D, 20G de l'amortisseur, non parallèles, sont inclinées par rapport au plan (X,Z), la distance entre les faces latérales 20D, 20G étant inférieure dans la portion avant 25 par rapport à la portion arrière 26. Les faces latérales 20D, 20G sont orthogonales au plan (X,Y) comprenant la face inférieure 20I.

La face supérieure 20S est inclinée par rapport au plan (X,Y), la distance entre les faces supérieure 20S et inférieure 20I étant inférieure dans la portion avant 25 par rapport à la portion arrière 26.

La face supérieure 20S de l'amortisseur 20 comprend une face supérieure droite et une face supérieure gauche inclinées et séparées par une arête d'interface 28. Comme on peut le voir sur la figure 2, les faces supérieures gauche et droite de l'amortisseur 20 sont respectivement en contact avec la face inférieure de la plateforme droite 124 et avec la face inférieure de la plateforme gauche 123', l'arête d'interface 28 étant placée au droit de la zone de contact entre les plateformes latérales 124, 123' des plateformes adjacentes 12, 12'.

Un bord avant 21 est formé à l'avant de la première portion avant de l'amortisseur 25, le bord avant 21 comprenant une première face transversale 21A par rapport à l'axe X et une deuxième face inclinée 21B par rapport à la dite première face 21A. Un bord arrière 22 est également formé à l'arrière de la portion arrière 26.

Une fois l'amortisseur 20 positionné dans son logement 14, celui-ci s'étend parallèlement aux plateformes 12, 12'. Le logement 14 de l'aube comprend un flanc amont 141 perpendiculaire au pied 13, le bord avant 21 de l'amortisseur 20 étant en butée contre ledit flanc 141.

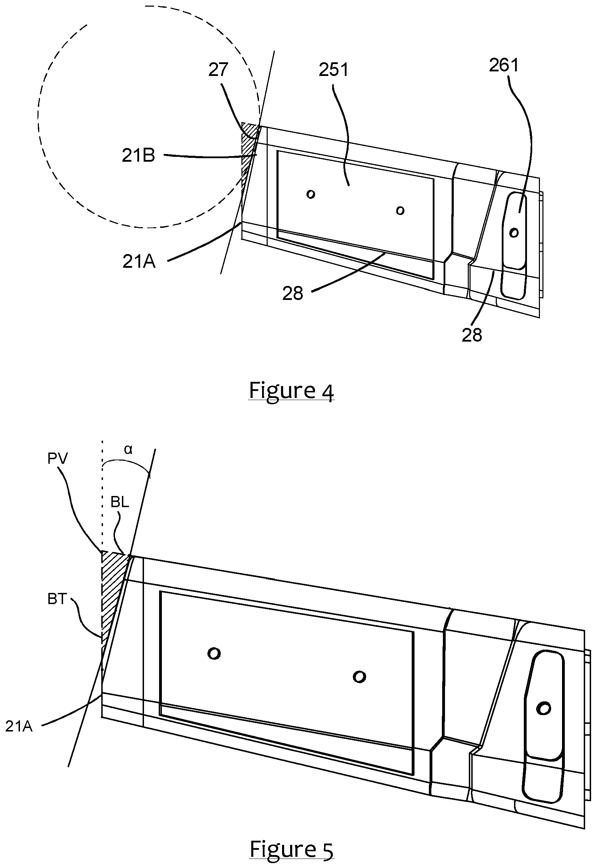

En référence à la figure 3, les deux portions 25, 26 sont sensiblement parallèles aux plateformes 12, 12'. Les portions avant 25 et arrière 26 comprennent respectivement, sur leurs faces extérieures, deux éléments de contact 251, 261 réalisés en métal et agencés pour être en contact avec la surface intérieure des plateformes 12, 12' des aubes 10, 10'. Ces éléments de contact métalliques 251, 261, permettent d'absorber les vibrations dues au débattement des aubes 10, 10'. Comme représentés sur la figure 4, les éléments de contact 251, 261 sont sensiblement rectangulaires.

L'amortisseur 20 est réalisé principalement en matière plastique. Il va de soi qu d'autres matières synthétiques pourraient également convenir.

En référence à la figure 3, la portion avant 25 de l'amortisseur 20 comprend, à son extrémité avant, un volume de réserve de masse 27, désigné volume de réserve 27, terminé à son extrémité avant par le bord avant 21.

Le volume de réserve 27 est agencé pour être découpé afin de calibrer la masse de l'amortisseur 20.

Suite au moulage de l'amortisseur 20 lors de sa fabrication, le bord avant 21 de l'amortisseur 20 comprend une unique face qui est transversale à l'axe X et parallèle au flanc amont 141 lorsque l'amortisseur est dans son logement 14. On découpe le volume de réserve 27 afin d'obtenir un amortisseur 20 calibré à la masse désirée.

La découpe de l'amortisseur 20 est réalisée à l'extrémité avant 21 du volume de réserve 27 de manière à ménager, sur le bord avant 21 de l'amortisseur 20, une partie parallèle au flanc amont 141 du logement, correspondant à la première face transversale 21A par rapport à l'axe X, et une partie inclinée par rapport au flanc amont 141 du logement, correspondant la deuxième face inclinée 21B.

En référence à la figure 3, la partie inclinée 21B du bord avant 21 est à gauche de la partie parallèle 21A. La partie inclinée 21B n'est pas en contact avec le flanc amont 141, empêchant ainsi de créer un contact pivot entre l'amortisseur 20 et l'aube 10. L'amortisseur 20 ne peut alors pas se déplacer dans le logement 14 lors du fonctionnement du moteur.

### Premier exemple de mise en oeuvre: découpe rectiligne du volume de réserve

Dans un premier exemple de mise en oeuvre, en référence aux figures 4 et 5, le volume de réserve 27 est découpé, ou biseauté, de manière rectiligne, l'angle de découpe α, formé entre la partie inclinée 21B et la partie parallèle 21A, étant compris entre 10° et 20°, de préférence égal à 14°.

En référence à la figure 5 représentant la face supérieure de l'amortisseur 20, on définit pour la face supérieure de l'amortisseur 20 un point virtuel PV correspondant à l'intersection de la droite prolongeant le bord gauche de l'amortisseur 20 avec la droite prolongeant la partie parallèle 21A du bord avant 21 de l'amortisseur 20. Le point PV, représenté sur la figure 5, correspond au coin de l'amortisseur 20 avant qu'il ne soit découpé.

Toujours en référence à la figure 5, on définit une première distance biseautée longitudinale BL correspondant à la distance prolongeant le bord gauche de l'amortisseur 20 jusqu'au point virtuel PV. On définit également une deuxième distance biseautée transversale BT correspondant à la distance prolongeant la partie parallèle du bord avant de l'amortisseur 20 jusqu'au point virtuel PV. La distance biseautée longitudinale BL est ici inférieure à la distance biseautée transversale BT.

La zone de contact entre l'amortisseur 20 et la plateforme 12 est ainsi diminuée sur le flanc amont 141 du logement 14.

La longueur de la première distance biseautée longitudinale BL est comprise entre 3,5mm et 7mm, de préférence égale à 5,8mm.

La longueur de la deuxième distance biseautée transversale BT est comprise entre 18mm et 22mm, de préférence égale à 20,3 mm

### Deuxième exemple de mise en oeuvre: découpe arrondie du volume de réserve

En référence à la figure 4, on réalise une découpe arrondie concave du volume de réserve 27 selon l'intersection de l'amortisseur 20 avec une sphère, représentée partiellement figure 4, dont le rayon est compris entre 0,5 m et 0,6 m.

Pour chacune des découpes, on réalise un rayonnage des arêtes 211 de la partie inclinée 21B de l'amortisseur 20, le rayonnage consistant à lisser les arêtes 211 en les arrondissant de manière à ce qu'elles aient un rayon de l'ordre du millimètre (ici 1 mm).

Toutes ces découpes et rayonnages permettent d'éviter que l'amortisseur 20 ne prenne appui sur la plateforme 14, déplaçant les zones de contact entre lesdites pièces et entraînant une usure prématurée des aubes. La découpe est réalisée de manière à limiter le contact en amont et à calibrer la masse de l'amortisseur.

Selon la méthode de calibrage de l'amortisseur 20, on détermine la masse de référence Mref de l'amortisseur 20 afin que le disque de soufflante, pourvu de ses aubes, soit équilibré. On mesure la masse effective Meff de l'amortisseur 20 après fabrication. De manière générale, la masse effective Meff est supérieure à la masse de référence Mref. Ensuite, on découpe le volume de réserve de masse 27 de manière à ce que la masse de l'amortisseur 20 découpé soit égale à la masse de référence Mref.

La découpe de l'amortisseur permet de résoudre deux inconvénients en même temps: son positionnement et son calibrage.

Une fois découpé, l'amortisseur 20 est logé dans son logement 14, la partie parallèle 21A du bord avant 21 étant en butée avec le flanc amont 141, la face latérale gauche 20G étant en butée avec le pied 13 de l'aube 10 et la face latérale droite 20D étant en butée avec le pied 13' de l'aube 50. L'amortisseur 20 est immobilisé entre les aubes 10, 10' et le disque de soufflante.

Les amortisseurs 20 sont fabriqués avec les mêmes moules que ceux de l'art antérieur. Il n'est donc pas nécessaire de modifier la chaîne de production pour fabriquer lesdits amortisseurs.

De manière avantageuse, on peut utiliser, dans un même moteur et pour un même jeu d'aubes, des amortisseurs selon l'art antérieur et selon l'invention. Ainsi, pour les moteurs déjà en circulation, on peut remplacer les amortisseurs usés par des amortisseurs selon l'invention. Les bénéfices de l'invention sont immédiats et ne nécessitent pas de modifications structurelles du moteur.

## Revendications

1. Amortisseur d'aube de soufflante d'un turboréacteur, s'étendant dans sa longueur selon un axe orienté X, dans sa largeur selon un axe orienté Y et dans sa hauteur selon un axe Z, comprenant dans sa longueur une première portion avant (25) et une deuxième portion arrière (26) de section transversale polygonale par rapport à l'axe X; l'amortisseur (20) comportant une face supérieure comprenant une face inclinée supérieure droite et une face inclinée supérieure gauche, amortisseur **caractérisé par le fait qu'**un bord avant (21) est formé à l'avant de la première portion avant de l'amortisseur (25), le bord avant (21) comprenant une première face transversale (21A) par rapport à l'axe X et une deuxième face inclinée (21B) par rapport à la dite première face (21A).

2. Ensemble d'une aube de soufflante (10) d'un turboréacteur avec soufflante et d'un amortisseur (20) d'aube de soufflante (10) selon la revendication 1, dans lequel l'aube de soufflante (10) comprenant un pied (13) et une plateforme (12), l'amortisseur (20) de l'aube de soufflante (10) étant adapté pour se fixer dans un logement (14) formé dans la face inférieure de la plateforme (12), ledit logement (14) comprenant un flanc amont (141) perpendiculaire au pied de l'aube (13), ladite première face (21A) dudit amortisseur (20) étant parallèle au flanc amont (141) du logement (14) et ladite deuxième face (21B) dudit amortisseur (20) étant inclinée par rapport audit flanc amont (141).

3. Ensemble selon la revendication 2, dans lequel ladite face (21A) parallèle au flanc amont (141) est en butée contre le flanc amont (141) du logement (14).

4. Ensemble selon l'une des revendications 2 à 3, dans lequel l'angle (α) formé entre ladite face parallèle (21A) du bord avant (21) et ladite face inclinée (21B) est compris entre 10° et 20°.

5. Ensemble selon l'une des revendications 2 à 4, dans lequel ladite face inclinée (21B) forme une surface plane.

6. Ensemble selon l'une des revendications 2 à 4, dans lequel ladite face inclinée (21B) forme une surface incurvée.

7. Ensemble selon l'une des revendications 2 à 6, dans lequel les arêtes de ladite face inclinée (21B) sont arrondies.

8. Ensemble selon l'une des revendications 2 à 7, dans lequel l'amortisseur (20) comprend sur sa face extérieure au moins une zone de contact métallique (251, 261).

9. Méthode de calibrage d'un amortisseur (20) d'un ensemble d'une aube de soufflante (10) d'un turboréacteur avec soufflante et d'un amortisseur (20) d'aube de soufflante (10) comprenant un volume de réserve de masse (27), méthode dans laquelle:
- on détermine la masse de référence (Mref) de l'amortisseur (20);
- on mesure la masse effective (Meff) de l'amortisseur (20);
- on découpe le volume de réserve de masse (27) de manière à ce que la masse de l'amortisseur (20) découpé soit égale à la masse de référence (Mref).

10. Méthode selon la revendication 9, dans laquelle le volume de réserve de masse (27) se situe à l'extrémité avant de l'amortisseur (20).

11. Méthode selon l'une des revendications 9 à 10, dans laquelle l'amortisseur (20) est un amortisseur selon la revendication 1.

## Patentansprüche

1. Dämpfer einer Gebläseschaufel eines Turbotriebwerks, der sich in seiner Länge entlang einer orientierten Achse X, in seiner Breite entlang einer orientierten Achse Y und in seiner Höhe entlang einer Achse Z erstreckt, der in seiner Länge einen ersten vorderen Abschnitt (25) und einen zweiten hinteren Abschnitt (26) mit polygonalem Querschnitt in Bezug auf die Achse X aufweist, wobei der Dämpfer (20) eine Oberseite aufweist, die eine rechte, obere, geneigte Fläche und eine linke, obere, geneigte Fläche aufweist, Dämpfer, der **dadurch gekennzeichnet ist, dass** eine Vorderkante (21) an der Vorderseite des ersten vorderen Abschnitts vor dem Dämpfer (25) gebildet ist, wobei die Vorderkante (21) eine erste Querfläche (21A) in Bezug auf die Achse X und eine zweite geneigte Fläche (21B) in Bezug auf die erste Fläche (21A) aufweist.

2. Anordnung einer Gebläseschaufel (10) eines Turbotriebwerks mit Gebläse und eines Dämpfers (20) einer Gebläseschaufel (10) nach Anspruch 1, wobei die Gebläseschaufel (10) einen Fuß (13) und eine Plattform (12) aufweist, wobei der Dämpfer (20) der Gebläseschaufel (10) geeignet ist, in einer Aufnahme (14) befestigt zu werden, die in der unteren Fläche der Plattform (12) gebildet ist, wobei die Aufnahme (14) eine vorgelagerte Flanke (141) aufweist, die senkrecht zu dem Fuß der Schaufel (13) ist, wobei die erste Fläche (21A) des Dämpfers (20) parallel zu der vorgelagerten Flanke (141) der Aufnahme (14) ist und die zweite Fläche (21B) des Dämpfers (20) in Bezug auf die vorgelagerte Flanke (141) geneigt ist.

3. Anordnung nach Anspruch 2, wobei die Fläche (21A), die parallel zu der vorgelagerten Flanke (141) ist, an der vorgelagerten Flanke (141) der Aufnahme (14) anliegt.

4. Anordnung nach einem der Ansprüche 2 bis 3, wobei der Winkel (α), der zwischen der parallelen Fläche (21A) der Vorderkante (21) und der geneigten Fläche (21B) gebildet ist, zwischen 10° und 20° beträgt.

5. Anordnung nach einem der Ansprüche 2 bis 4, wobei die geneigte Fläche (21B) eine ebene Fläche bildet.

6. Anordnung nach einem der Ansprüche 2 bis 4, wobei die geneigte Fläche (21B) eine gekrümmte Fläche bildet.

7. Anordnung nach einem der Ansprüche 2 bis 6, wobei die Kanten der geneigten Fläche (21B) abgerundet sind.

8. Anordnung nach einem der Ansprüche 2 bis 7, wobei der Dämpfer (20) auf seiner Außenseite mindestens einen metallischen Kontaktbereich (251, 261) aufweist.

9. Verfahren zur Kalibrierung eines Dämpfers (20) einer Anordnung einer Gebläseschaufel (10) eines Turbotriebwerks mit Gebläse und eines Dämpfers (20) einer Gebläseschaufel (10), die ein Reserve-Massevolumen (27) aufweist, Verfahren, wobei:
- die Bezugsmasse (Mref) des Dämpfers (20) bestimmt wird,
- die effektive Masse (Meff) des Dämpfers (20) gemessen wird,
- das Reserve-Massevolumen (27) derart zugeschnitten wird, dass die Masse des zugeschnittenen Dämpfers (20) gleich der Bezugsmasse (Mref) ist.

10. Verfahren nach Anspruch 9, wobei sich das Reserve-Massevolumen (27) an dem vorderen Ende des Dämpfers (20) befindet.

11. Verfahren nach einem der Ansprüche 9 bis 10, wobei der Dämpfer (20) ein Dämpfer nach Anspruch 1 ist.

## Claims

1. Fan blade damper of a turbojet, extending in its length along an axis oriented X, in its width along an axis oriented Y and in its height along an axis Z, comprising in its length a first front portion (25) and a second rear portion (26) of polygonal cross section relative to the axis X; the damper (20) comprising an upper face comprising an upper right inclined face and an upper left inclined face, damper **characterized in that** a front edge (21) is formed at the front of the first front portion of the damper (25), the front edge (21) comprising a first face (21A) that is transverse relative to the axis X and a second face (21B) that is inclined relative to said first face (21A).

2. Assembly of a fan blade (10) of a turbojet with fan and a fan blade (10) damper (20) according to claim 1, wherein the fan blade (10) comprising a root (13) and a platform (12), the fan blade (10) damper (20) being suitable for being attached in a housing (14) formed in the lower face of the platform (12), said housing (14) comprising an upstream side (141) perpendicular to the root (13) of the blade, said first face (21A) of said damper (20) being parallel to the upstream side (141) of the housing (14) and said second face (21B) of said damper (20) being inclined relative to said upstream side (141).

3. Assembly according to claim 2, wherein said face (21A) parallel to the upstream side (141) is in abutment against the upstream side (141) of the housing (14).

4. Assembly according to either of claims 2 to 3, wherein the angle (α) formed between said face parallel (21A) of the front edge (21) and said inclined face (21B) is between 10° and 20°.

5. Assembly according to either of claims 2 to 4, wherein said inclined face (21B) forms a flat surface.

6. Assembly according to either of claims 2 to 4, wherein said inclined face (21B) forms a curved surface.

7. Assembly according to either of claims 2 to 6, wherein the ridges of said inclined face (21B) are rounded.

8. Assembly according to either of claims 2 to 7, wherein the damper (20) comprises on its outer surface at least one metallic contact zone (251, 261).

9. Method for calibrating a damper (20) of an assembly of a fan blade (10) of a turbojet with fan and a fan blade (10) damper (20) comprising a weight reserve volume (27), a method wherein:
- the reference weight (Mref) of the damper (20) is determined;
- the effective weight (Meff) of the damper (20) is measured;
- the weight reserve volume (27) is cut out so that the weight of the cut-out damper (20) is equal to the reference weight (Mref).

10. Method according to claim 9, wherein the weight reserve volume (27) is situated at the front end of the damper (20).

11. Method according to either of claims 9 to 10, wherein the damper (20) is a damper according the claim 1.
